# EUROPEAN PATENT APPLICATION

(11) **EP 3 862 216 A1**
(43) Date of publication of application: **11.08.2021**
(21) Application number: 19868282.5
(22) Date of filing: 20.06.2019
(51) Int. Cl.: B60L 53/30, A47C 11/00

(54) **URBAN BENCH FOR PARKING AND CHARGING VEHICLES**

(30) Priority: 02.10.2018 ES 201800583 U
(71) Applicant: Hernández Bethencourt, Santiago José, 46014 Valencia (ES); Hernandez Bethencourt, Antonio Manuel, 46014 Valencia (ES); Villar Cloquell, Javier, 46004 Valencia (ES)
(72) Inventor: HERNANDEZ BETHENCOURT, Santiago José, 46014 Valencia (ES)
(74) Representative: Galán Vélez, Reyes
(86) International application number: PCT/ES2019/070427
(87) International publication number: WO 2020/070353

(57) **Abstract**

The invention proposes to offer means to house and / or charge electric vehicles such as scooters by resolving their integration into public spaces or establishments through a solution that preserves them from inclement weather as well as vandalism or robbery, while offering a bank that can be used at the same time to sit down. This avoids the serious problems that are generated when these vehicles occupy the sidewalks and other spaces and solves charging problems especially in fleet services. The bank can present individualized cabins with space for security elements such as vests or helmets, as well as media for remote management; versions are planned that incorporate a space for vending.

Intended for the electric mobility sector as well as the urban furniture sector.

## Description

### Technical sector

The present invention is part of the industrial sector specialized in the manufacture of electric vehicles as well as their accessories, especially scooters and bicycles.

### Background

It is evident that sustainability and the society's commitment to the environment have generated new life models that affect how we move, there are known proposals for bicycle mobility developed by companies, some allow retaining bicycles and release them based on a complex computerized system that can include, in the most sophisticated facilities, an application for the mobile phone.

Some innovations give solution to the charging and parking as reflected in the Spanish utility model with publication number 1206038 of the applicant SenaeEnergy S.L. which describes a unit that can be integrated into a pole or lamppost, a complex solution due to its visual impact and the risks arising from gathering objects in height. Other charging and parking stations propose to house the vehicles and charging facilities under a structure that is basically a rectangular prism, which again does not resolve the occupation of public spaces, since these are limited and this type of solutions operate to the detriment of the pedestrian who is invaded by the limited space that has on the sidewalks, making its implementation difficult in an urban environment. There are other solutions for anchoring and recharging systems; in this case for bicycles in which they are also outdoors and the space occupied by them is not used for another use, we can see it in the patent with publication number 2472445 of the applicant Bonopark S.L. or in European patent EP 2781397 of the applicant JCDECAUX SA.

Recently, electric scooters have been introduced, especially in the urban environment, as a fast and economical means to make short or medium-distance journeys, but some obstacles have emerge for companies that offer rental services for this type of vehicles among others, its charge, since when a user rents an electric scooter he wants a state of charge close to the maximum of its capacity to avoid the discharge of the battery before reaching its destination, to return to the renting point to take another one is not operational. On the other hand the rental points of this type of vehicles are normally outdoors; this implies deterioration derived from inclement weather and / or vandalism.

### Object of the invention

The object of the present invention is to create means to facilitate the integration of electric scooters as a sustainable means of transport, this invention solves the problems of occupation of sidewalks and public spaces that generate these vehicles, placing them in turn in an element that protects them from the elements from time and protect them from vandalism. The occupation of the sidewalks is solved with remarkable benefits since the vehicles are located at a point that allows in the one hand their charge and that on the other hand constitutes a bank for pedestrians, which also contributes to improving modern cities both for their better operability and for its image.

### Description of the invention

The urban bank for parking and charging of vehicles of the present invention has a surface that has two laminar planes perpendicular to each other which allows its use as a bench when generating a support for the seat and another for backrest, from the backrest emerges a portion substantially parallel to the ground that extends the covered area under the bench and in which, additionally, it is possible to place solar panels to increase the energy sufficiency of the recommended invention, versions are provided in which, to facilitate the stability of the bank without the need if anchored, the bank has a piece of laminated material that parallel to the ground joins the bench described. This enables to exploit the area generated under the bank to arrange the electric vehicles, the bank has some separators that in one of its embodiments are perpendicular to the described surface where the vehicles are introduced without leaving any part of them outside, generating different individual cabins depending on their length, closing these cabins by means of doors or bars, it is possible to allow or deny access to a user, by providing the invention of means that coordinated with the electric skates to know the number of skates, their charging status or any other incident.

These means consist of at least one control unit as well as conventional wireless communication means such as Bluetooth or WIFI; the bank has power supplied directly from the network or preferably by a battery that allows the charging of vehicles that are parked both by means of an electrical connector and by inductive charging. Its design allows joining as many banks as necessary, as well as transporting them to other areas where it is required depending on demand.

In another option for implementation of the invention the cabins are arranged in the main direction of the bank by introducing the vehicles along the sides of the bank, this allows their installation and use on sidewalks of small dimensions. Since there are skates in which the folding of the handlebar is not possible, and this determines the maximum width of the vehicle, versions are planned in which to exploit the space or the individual cabins present alternately a lifting elevation resolving this circumstance.

Its integration in the cities solves the problem of random occupation of the spaces of the public highway, charging and conservation of these as described, allows users to have a space in the cabins to accommodate a helmet and / or vest for its security, while offering added value as street furniture.

In a preferred embodiment, at least one of its cabins is used as a space for vending machines.

### Description of the drawings

Other features and advantages of the invention will become apparent during the following description of one of the embodiments thereof, given as a no limiting example, with reference to the attached drawings.

In the drawings:
Figure 1 shows an isometric view of the urban parking bench and charging of vehicles
   (1) in which we can see its lateral covering (2), the doors (3) that define the space of the individual cabin (4) and a scooter (6).
Figure 2 represents the bank (1) with its side covering (2) doors (3), cabins (4) for vehicles and solar panels (7) for the bank's energy autonomy.

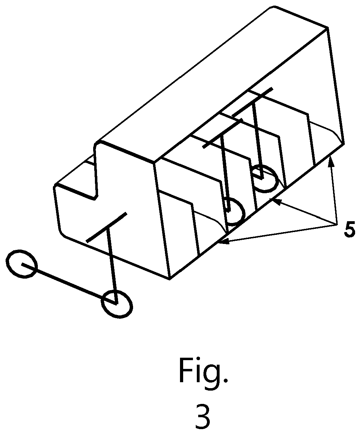

In figure 3 we can see an isometric view in which the doors have not been represented to facilitate the understanding of its elements, shows the elevations (5) placed alternately in the cabins, the height of the handlebars may be different, the separation elements do not reach the full height of the bench as shown.

### Description of a preferred embodiment of the invention

A preferred embodiment is cited by way of example, being independent of the object of the invention, the materials used in its manufacture, as well as the methods of application and all the accessory details that may arise, as long as they do not affect its essentiality.

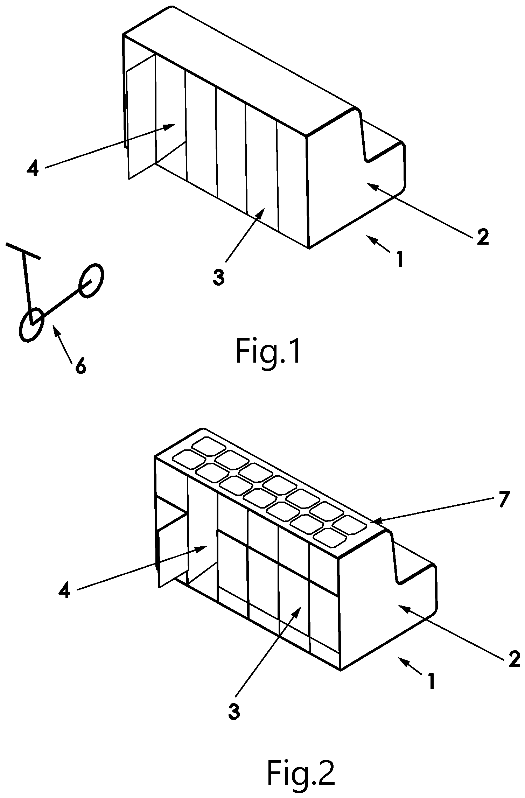

The urban bank for parking and changing of vehicles of this embodiment consists of a surface preferably carried out with laminated material that defines two meeting planes near a right angle generating a seat and a backrest for use as a bench, the surface described extends from the seat to the floor, in the encounter with the floor this blade bends at a right angle to form the floor of the bank while it has adequate stability without the need to anchor it to the pavement if it is not required; Starting from the backrest, a blade of material is extended parallel to the ground that increases the area under the bench that is used to park the vehicles, so as can be seen from the description, this prismatic surface can be manufactured in a simple and economical, for example, bending a stainless steel blade. The bank has two lateral coverings (2) and has defined individual cabins (4) for the vehicles generated by a laminar-shaped spacers perpendicular to the plane that defines the backrest and firmly is attached to it by conventional means such as welding joint, screws or rivets, figure 2. It has closing elements for these cabins such as the use of doors (3). To allow access to the cabins, it has secure closing means such as locks. The proposed invention presents means for the electric charging of vehicles by having a supply point of supply of the electric network as well as a battery for its location where the network is not accessible, this charging is carried out by means of a power cable and / or wireless charging for each of the vehicles. It has means to manage the load of the vehicles and their access to customers through at least one control unit that presents conventional means of communication such as Bluetooth or WIFI with the vehicles and with the remote systems of the owner of the banks and their users.

## Claims

1. Urban bench for parking and vehicle charging **characterized by** having a surface generated by two planes that are close to a right angle that define a seat and a backrest, from which a laminar portion emerges substantially parallel to the ground that extends the area for the location of the vehicles; the bank presents two lateral coverings (2) as well as separations for the creation of different individualized cabins formed by laminated material joined to the bank by conventional means; It has means to allow or deny access to these cabins described such as the use of doors (3) whose access to the user is managed by at least one control unit and conventional media such as Bluetooth or WIFI that transmit vehicle data as well as enables remote assistance or management, allowing vehicles to charge when they have power from the network and / or battery, either through a cable or through wireless means.

2. Urban bank for parking and charging of vehicles according to the first claim **characterized by** finding the separations that make up the individual cabins perpendicular to the plane that defines the back of the bank, the access doors (3) being perpendicular to said separations and parallel to the plane of the backrest.

3. Claim according to the first claim **characterized by** finding the separations that make up the individualized cabins parallel to the plane defining the backrest by finding the access doors (3) located on the sides of the bench.

4. Claim according to claims 1, 2 and 3 **characterized in that** they have at least one lift (5) located on the floor of the cabins and arranged alternately therein.

5. Claim according to the preceding claims **characterized by** using the external surface of the banks for the placement of solar panels.

6. Claim according to the preceding claims **characterized by** having at least one vending machine for sale in at least one of the individualized booths.
